# EUROPEAN PATENT APPLICATION

(11) **EP 2 835 232 A1**
(43) Date of publication of application: **11.02.2015**
(21) Application number: 12873864.8
(22) Date of filing: 02.04.2012
(51) Int. Cl.: B25J 9/22

(54) **ROBOT SYSTEM AND WORK FACILITY**

(71) Applicant: Kabushiki Kaisha Yaskawa Denki, Kitakyushu-shi, Fukuoka 806-0004 (JP)
(72) Inventor: YOSHIDA Osamu, Kitakyushu-shi Fukuoka 806-0004 (JP); UENO Tomohiro, Kitakyushu-shi Fukuoka 806-0004 (JP); KIHARA Eiji, Kitakyushu-shi Fukuoka 806-0004 (JP); NAMBA Taro, Kitakyushu-shi Fukuoka 806-0004 (JP)
(74) Representative: Viering, Jentschura & Partner Patent- und Rechtsanwälte
(86) International application number: PCT/JP2012/058985
(87) International publication number: WO 2013/150599

(57) **Abstract**

[object] To decrease a labour burden of an instructor in relation to teaching work, and improve the convenience of the instructor.

[Solving means]

A robot system 1 comprises a plurality of work facilities 100 comprising a robot 110, a robot controller 120, and a camera 130, and a central server 200 comprising a teaching information database 2030 configured to stores a plurality of teaching information associated with patterns of image information processed based on a processing algorithm. The central server 200 accepts image information generated by the camera 130 of each work facility 100, and determines whether or not the plurality of teaching information stored in the teaching information database 2030 includes teaching information comprising a correlation with respect to the pattern of the image information based on the pattern of the accepted image information. Then, the specific teaching information determined to comprise the correlation is transferred from the teaching information database 2030 to the robot controller 120 of the corresponding work facility 100.

## Description

### TECHNICAL FIELD

The present disclosure relates to a robot system and a work facility.

### BACKGROUND ART

Patent Document 1 discloses a robot teaching system. This robot teaching system comprises a robot, a robot controller, and a robot teaching device (teaching operation terminal). The robot moves based on taught position information. The robot controller activates the robot based on a predetermined program. The robot teaching device teaches position information to the robot.

### Patent Documents

- Patent Document 1:: Japanese Patent laid-open 2008-21239

### DISCLOSURE OF THE INVENTION

### Problems to be Solved by the Invention

Generally, at a site where work is performed by a robot, an instructor teaches the robot how to move with respect to a work target using the robot teaching device, and the teaching information is stored in a robot controller before the work is performed. Then, when the work is performed, the robot controller controls the movement of the robot based on the teaching information stored in advance, causing the robot to execute the movement with respect to the work target. Nevertheless, in general, each time the work target of the robot changes, the instructor needs to reteach the robot how to move with respect to the work target, resulting in inconvenience.

The present invention has been made in view of such problems, and it is therefore an object of the present invention to provide a robot system and a work facility capable of decreasing a labour burden of an instructor in relation to teaching work, and improving the convenience of the instructor.

### Means for Solving the Problems

In order to achieve the above-described object, according to one aspect of the present invention, there is provided a robot system, comprising one or more work facilities comprising a robot configured to perform predetermined work, a robot controller including a storage part configured to store teaching information which regulates a movement of the robot and controlling the movement of the robot based on the teaching information stored in the storage part, and a sensor provided in correspondence with the robot, and a central computer device data-communicably connected to each of the one or more work facilities, the central computer device comprising a teaching information database configured to store a plurality of the teaching information in association with detection information of the sensor or processed information acquired by performing processing based on a processing algorithm for the detection information in each work facility on the detection information, an information accepting part configured to accept the detection information of the sensor of each work facility, and a correlation determining part configured to determine whether or not the plurality of teaching information stored in the teaching information database includes teaching information comprising a predetermined correlation with respect to the detection information accepted by the information accepting part or the processed information corresponding thereto, based on the detection information or the processed information, and the robot system further comprises a first transferring part configured to transfer specific the teaching information determined to comprise the correlation by the correlation determining part from the teaching information database to the storage part of a corresponding the work facility.

### Advantages of the Invention

According to the present invention, it is possible to decrease the labour burden of the instructor in relation to teaching work, and improve the convenience of the instructor.

### BRIEF DESCRIPTION OF THE DRAWINGS

FIG. 1 is a system configuration diagram schematically showing the overall configuration of a robot system in an embodiment.
FIG. 2 is an explanatory view showing another example of a central server.
FIG. 3 is a schematic diagram schematically showing the configuration of a work facility of one site.
FIG. 4 is a function block diagram showing the functional configuration of the robot controller, camera, and IF device of one site, and the central server.
FIG. 5 is a table showing an example of the stored contents of the teaching information database.
FIG. 6 is a flowchart showing an example of the control procedure executed by the control part of the central server.
FIG. 7 is a flowchart showing an example of the control procedure executed by the control part of the robot controller in accordance with a case where specific teaching information and correlation degree data are transferred from the central server.
FIG. 8 is a flowchart showing an example of the control procedure executed by the control part of the robot controller in accordance with a case where an error signal is output from the central server.

### BEST MODE FOR CARRYING OUT THE INVENTION

An embodiment will now be described with reference to accompanying drawings.

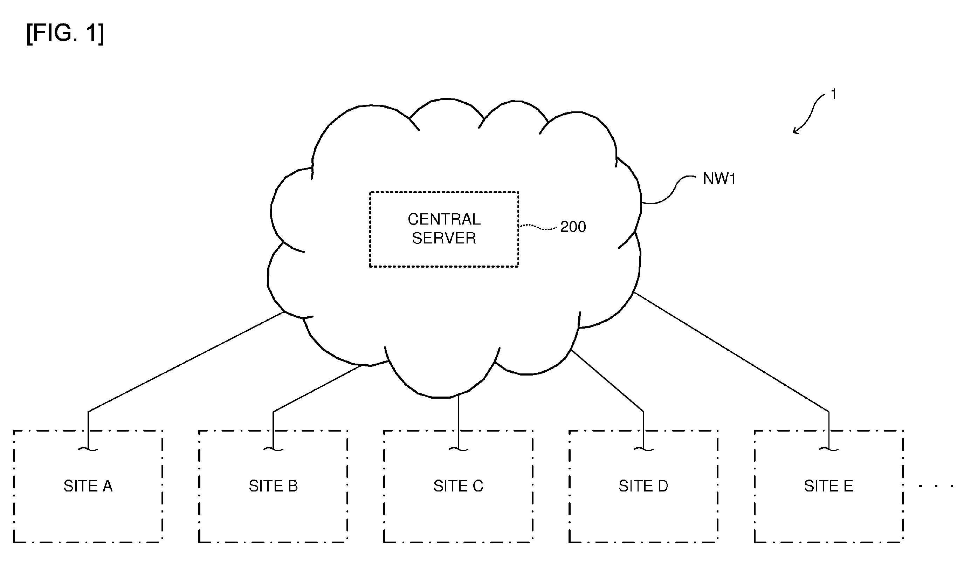

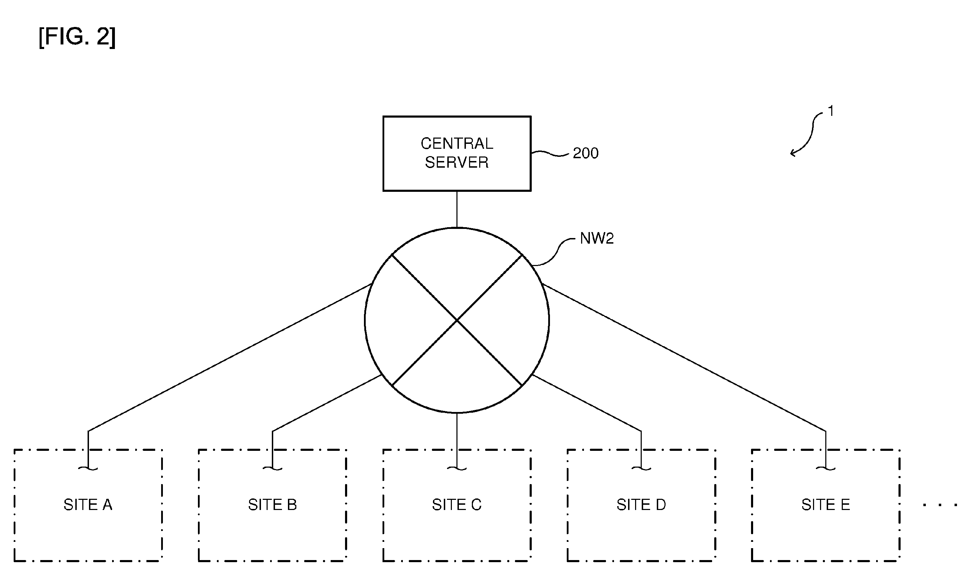

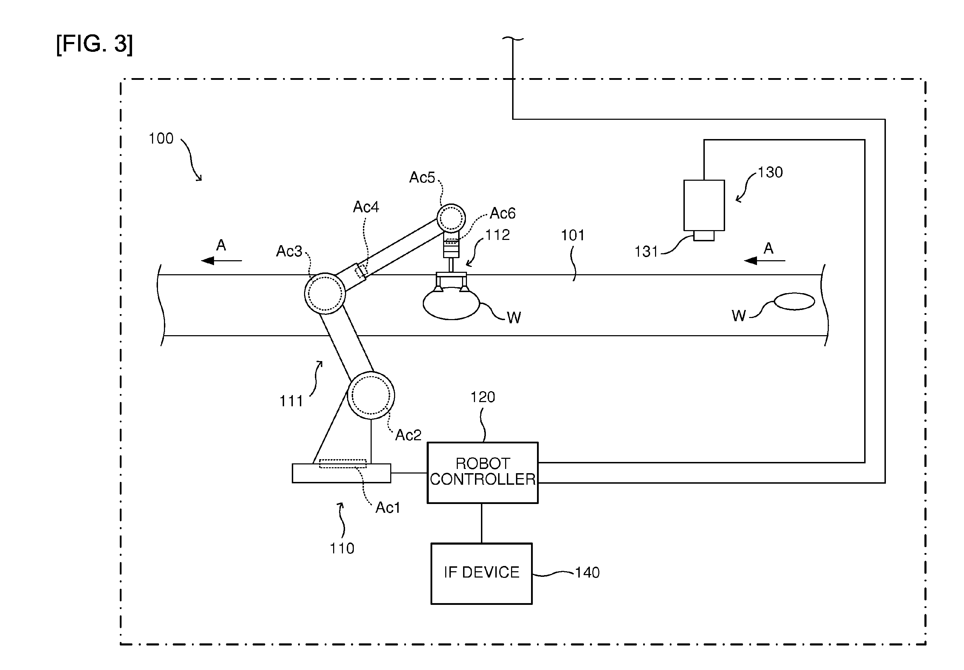

As shown in FIG. 1, a robot system 1 in this embodiment comprises a plurality of work facilities 100 (not shown in FIG. 1; refer to FIG. 3 described later) respectively disposed in a plurality of sites (described as "Site A" "Site B" "Site C" "Site D" "Site E"... in FIG. 1), such as plants and the like comprising production lines, for example, and a central server 200 (central computer device). The central server 200 is a server common to (shared by) the work facilities 100 of the plurality of sites. This central server 200 is configured as an aggregate of one or more computation devices and one or more storage devices linked by a network cloud NW1 (network), and is data-communicably connected to each of the plurality of work facilities 100. Note that, as shown in FIG. 2, a single computation device connected to the respective work facilities 100 via a suitable network NW2 may be used as the central server 200. In this case, the central server 200 is installed in an office building or the like of a proprietary company of the robot system 1, for example.

As shown in FIG. 3, a conveyor 101 that feeds a work W in a predetermined transport direction (the direction indicated by arrow A in FIG. 3) is disposed in one site. The work W, in this example, is an irregular object with inter-individual variance and irregularity in shape and size. Further, a robot 110, a robot controller 120, a camera 130 (image sensor, sensor) comprising a lens 131, and an interface device 140 (robot teaching device; hereinafter abbreviated "IF device 140") are disposed as the work facility 100 in this site. Note that, while only one site is shown in FIG. 3, the same holds true for the other sites as well. The robot controller 120 of each site and the above described central server 200 are data-communicably connected to each other via the above described network cloud NW1.

The robot 110 performs handling work that holds and transfers the work W, which is a work target, continuously and successively fed by the conveyor 101, as the predetermined work. This robot 110 comprises an arm 111 and actuators Ac1, Ac2, Ac3, Ac4, Ac5, Ac6, each constituting a servo motor for driving this arm 111. A suction-type hand 112 capable of lifting the work W by vacuum suction is attached to the tip end of the arm 111. Further, while not shown in FIG. 3, a tool 112 (such as a servo hand, fork-type hand, or chuck-type hand, for example) that is a different type from the suction-type hand 112 is disposed near the robot 110. The robot 110 performs a tool replacement movement using an ATC (Auto Tool Changer) or the like, making it possible to replace the tool 112 on the tip end of the arm 111.

The robot controller 120 is intercommunicably connected to the servo motors of the respective actuators Ac1-Ac6 disposed on the above described arm 111, and controls the driving of the respective servo motors. With this arrangement, the overall movement of the respective actuators Ac1-Ac6, that is, the movement of the robot 110, is controlled. Further, the robot controller 120 controls the movement (such as turning a vacuum device (not shown) ON and OFF in order to change the suction part of the suction-type hand 112 to a vacuum state, for example) of the tool 112 attached to the tip end of the above described arm 111.

The camera 130 is fixed to a support member (not shown) on the upstream side above the transport path of the work W so that it can take an image of the fed work W via the above described lens 131. Note that the camera 130 may be disposed on the robot 110 side (such as on the tip end side of the arm 111, for example). This camera 130 takes an image of the fed work W via the lens 131, and generates image information including the image of the work W thus taken. The generated image information is output to the robot controller 120 as detection information and transmitted from a transmitting part 122a of a communication control part 122 described later to the central server 200 via the above described network cloud NW1. Note that the camera 130 may directly transmit the image information to the central server 200.

The IF device 140 is a device used by an instructor to create and edit teaching information that regulates the movement of the robot 110, and by an operator to input various information, and comprises a personal computer, teaching pendant, and the like. The teaching information created or edited by the IF device 140 is output and stored in the robot controller 120 (details described later). Further, the information (described later) to be transmitted to the central server 200 that has been input by the operator via the IF device 140 is output to the robot controller 120 and transmitted from the transmitting part 122a of the communication control part 122 described later to the central server 200 via the above described network cloud NW1. Note that the IF device 140 may directly transmit the information to be transmitted to the above described central server 200 to the central server 200.

The central server 200 respectively accepts the image information transmitted from the robot controller 120 of each site, performs feature extraction processing (image processing) on the accepted image information, and extracts unique features (patterns) to the image information (details described later). Note that the extracted pattern of the image information is equivalent to the processed information and processed image information.

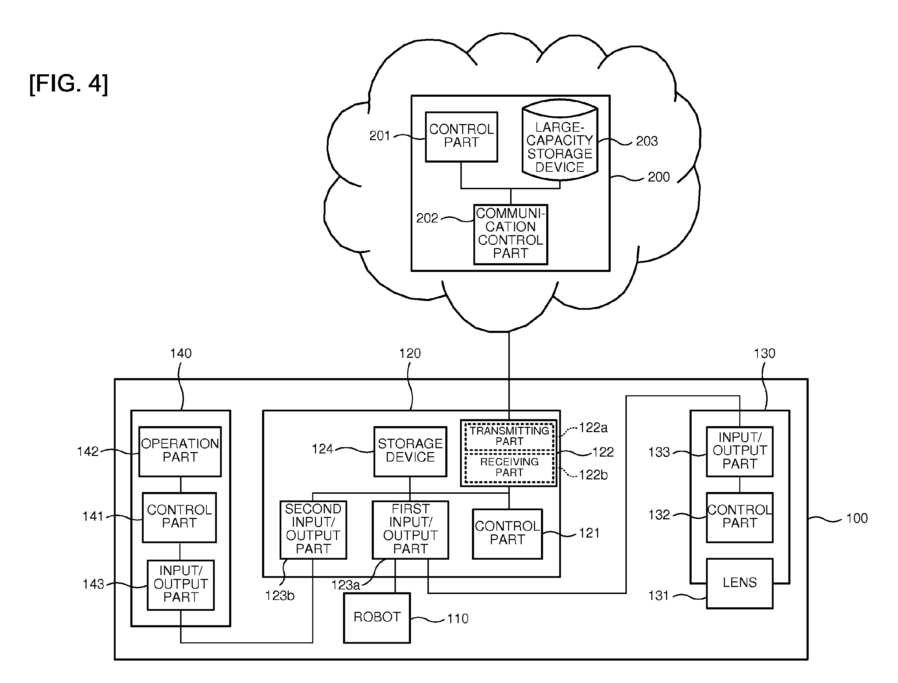

As shown in FIG. 4, the camera 130 of the work facility 100 disposed in one site comprises the above described lens 131, a control part 132, and an input/output part 133 as a functional configuration.

The control part 132 controls the entire camera 130. For example, the control part 132 generates image information, including the image of the above described work W taken via the lens 131.

The input/output part 133 controls the information communication performed with the robot controller 120. For example, the input/output part 133 controls the information communication when image information generated by the control part 132 is output to the robot controller 120.

The IF device 140 comprises a control part 141, an operation part 142, and an input/output part 143 (information output part) as a functional configuration.

The control part 141 controls the entire IF device 140.

The operation part 142 comprises keys, buttons, switches, and the like that the instructor operates to input various information such as teaching information. The instructor suitably operates this operation part 142 to create teaching information, edit the teaching information stored in a storage device 124 of the robot controller 120, and input various information.

The input/output part 143 controls the information communication performed with the robot controller 120. For example, the input/output part 143 outputs the teaching information created or edited by the instructor via the operation part 142 to the storage device 124 of the robot controller 120. With this arrangement, the output teaching information is stored in the storage device 124. Further, for example, the input/output part 143 outputs the information (described later) to be transmitted to the central server 200, which had been input by the operator via the operation part 142, to the robot controller 120.

The robot controller 120 comprises a control part 121, the communication control part 122, a first input/output part 123a, a second input/output part 123b, and the storage device 124 (storage part) as a functional configuration.

The first input/output part 123a controls the information communication performed between the robot 110 and the camera 130. For example, the first input/output part 123a controls the information communication when image information output by the camera 130 is input.

The second input/output part 123b controls the information communication performed with the IF device 140. For example, the second input/output part 123b controls the information communication when the teaching information and the information to be transmitted to the above described central server 200, output from the IF device 140, are input.

The communication control part 122 comprises the transmitting part 122a (transmitter) and a receiving part 122b (receiver), and controls the information communication performed with the central server 200 via the network cloud NW1. For example, the transmitting part 122a controls the information communication when the image information from the camera 130 input by the first input/output part 123a, and the teaching information and information to be transmitted to the above described central server 200 from the IF device 140 input by the second input/output part 123b are transmitted to the central server 200 via the network cloud NW1. The receiving part 122b controls the information communication when specific teaching information (described later) transmitted from the central server 200 is received via the network cloud NW1.

The storage device 124 comprises an HDD (Hard Disk Drive) and the like, for example, and stores various information and the like. For example, the storage device 124 stores the teaching information from the IF device 140 input by the second input/output part 123b, and the above described specific teaching information received by the receiving part 122b.

The control part 121 controls the entire robot controller 120. For example, the control part 121 controls the driving of the above described respective servo motors of the robot 110, controls the movement of the above described tool 112, and the like based on the teaching information stored in the storage device 124, thereby controlling the movement of the robot 110.

The central server 200 comprises a control part 201, a communication control part 202 (information accepting part, signal output part), and a large-capacity storage device 203 as a functional configuration.

The communication control part 202 is configured to control the information communication performed with the robot controller 120 of each site via the network cloud NW1. This communication control part 202 comprises a configuration serving as an information accepting part that accepts (receives) the image information transmitted from the robot controller 120 of each site, and a configuration serving as a signal output part that transmits (outputs) error signals described later to the robot controller 120 of the corresponding site.

The control part 201 controls the entire central server 200. For example, the control part 201 performs feature extraction processing on the image information received by the communication control part 202, and extracts the pattern of the image information.

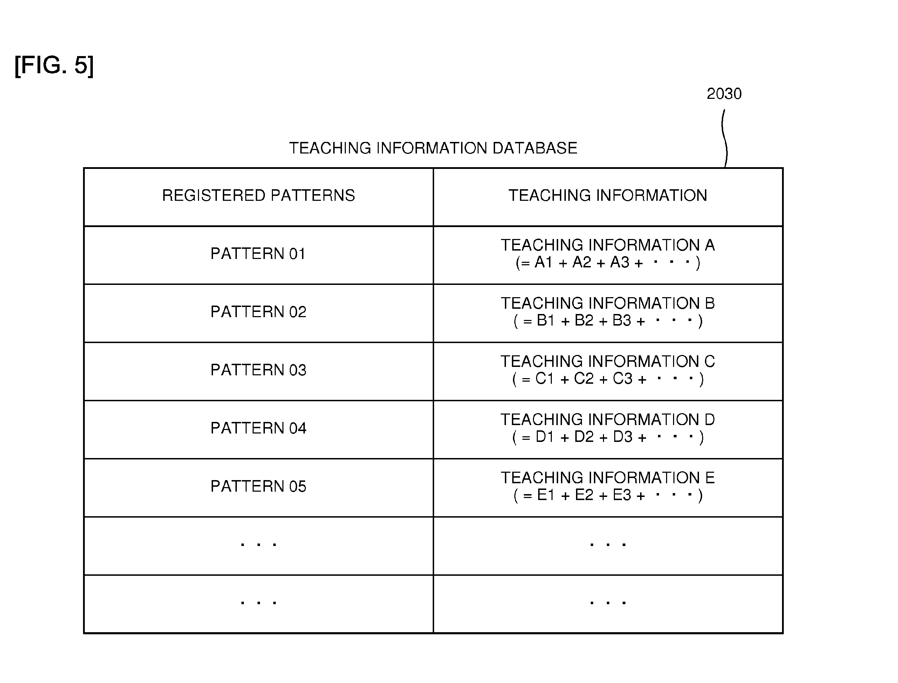

The large-capacity storage device 203 is configured as an aggregate of a plurality of storage media that exist inside the network cloud NW1, and is capable of variably setting the storage capacity and the like. This large-capacity storage device 203 stores the teaching information database 2030 (refer to FIG. 5 described later) and comprises an algorithm storage part (not shown). The algorithm storage part stores a plurality of types of processing algorithms associated with a shape pattern of a detected target object.

The processing algorithms include a type that cuts out circular regions from the image information received by the communication control part 202 and outputs the position information of the respective regions cut out (suitable in a case where a target with a circular hole is to be detected), and a type that detects a length of a long axis and a position posture of each object from the image information (suitable in a case where a long, narrow target, such as a bolt, is to be detected). Further, the processing algorithms also include a type that simply translates image information into binary values following conditions, a type that just divides the region based on the image information, as well as a type that configures one processing algorithm from a combination of a plurality of processing algorithms.

According to this embodiment, the control part 201 is configured to select the processing algorithm to be used in feature extraction processing from the plurality of types of processing algorithms stored in the algorithm storage part in accordance with the information that has been transmitted from each site and is to be transmitted from the IF device 140 to the central server 200, more specifically, the information that provides instructions regarding the processing algorithm of feature extraction processing (hereinafter suitably referred to as "instruction information"), and sets the parameters and the like to be used in the processing algorithm. In particular, according to this embodiment, the control part 201 constitutes a processing algorithm that performs feature extraction processing on the image information from the site and extracts the pattern of the image information. Note that, in a case where the same processing is performed in each site, the processing algorithm configured by the control part 201 is used as a common processing algorithm (hereinafter suitably referred to as "common image processing algorithm") for the image information from each site.

Note that while the above has described the work facility 100 of one site, similarly at least the robot 110, the robot controller 120, the camera 130, and the IF device 140 (each may be a type constituting a structure and configuration that differs from that of the above described site) are disposed as the work facilities 100 in the other sites as well.

As shown in FIG. 5, the teaching information database 2030 stores a plurality of patterns of image information (described as "Pattern 01" "Pattern 02" "Pattern 03" "Pattern 04" "Pattern 05"... in FIG. 5) and a plurality of teaching information (described as "Teaching information A" "Teaching information B" "Teaching information C" "Teaching information D" "Teaching information E"... in FIG. 5) that regulates the movement of the robot 110 with respect to the work W related to the image information, respectively in association. Hereinafter, the patterns of the image information stored in the teaching information database 2030 are suitably referred to as "registered patterns."

The registered patterns are the patterns of the image information extracted by the control part 201 of the central server 200 after performing feature extraction processing based on the above described common image processing algorithm on the image information of the work W taken by the camera 130.

The teaching information is teaching information that regulates the movement of the robot 110 with respect to the work W. The teaching information includes a plurality of information related to the handling work of the work W, such as information that indicates the type of the tool 112 to be used in the handling work of the work W, information that indicates the lifting position (coordinates) of the work W by the tool 112, and information that indicates the movement speed during the handling work of the work W, for example. Note that information such as shape and size information of the work W and identification information of the work W (the name or the like, for example) may also be stored as teaching information.

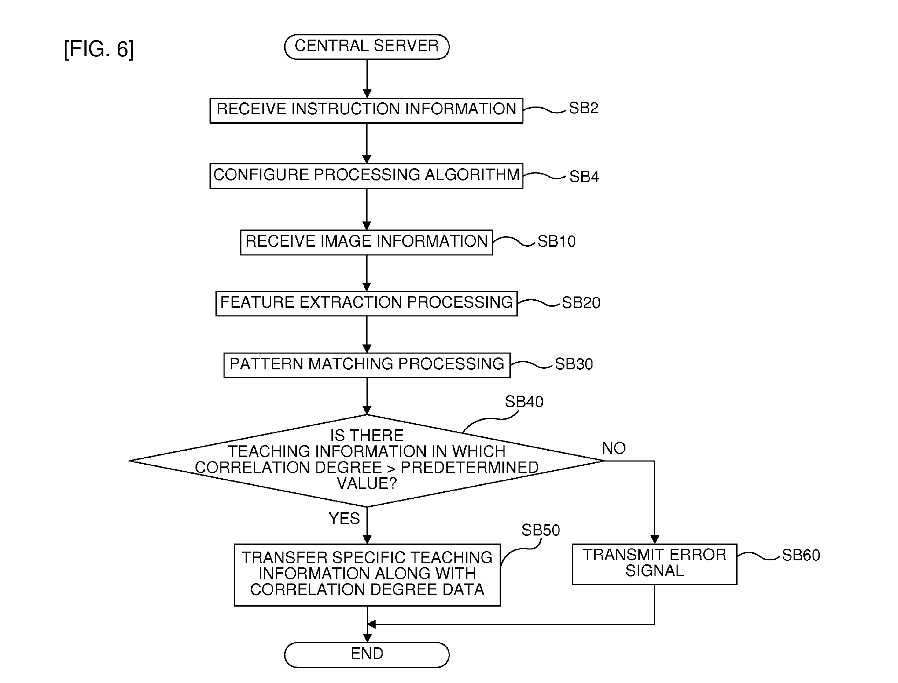

The following describes the control procedure executed by the control part 201 of the central server 200, using FIG. 6.

In FIG. 6, the processing shown in this flow is started by a predetermined start operation (power ON of the central server 200, for example). That is, when the operator operates the operation part 142 of the IF device 140 to input the above described instruction information, the instruction information is output to the robot controller 120 by the input/output part 143. Then, the control part 120 of the robot controller 120 inputs the instruction information output from the input/output part 143 of the IF device 140 by the second input/output part 123b, and transmits the instruction information from the transmitting part 122a to the central server 200 via the network cloud NW1. With this arrangement, the control part 201, first in step SB2, receives the instruction information transmitted from the transmitting part 122a of the robot controller 120 by the communication control part 202.

Subsequently, in step SB4, the control part 201 selects the processing algorithm to be used in the feature extraction processing from the plurality of types of processing algorithms stored in the algorithm storage part in accordance with the instruction information received in the above described step SB2, and configures the above described common image processing algorithm.

Then, when an image of the work W fed to an area inside the angle of view of the lens 131 by the conveyor 101 is taken by the camera 130, the image information of the work W is generated and the image information is output to the robot controller 120 by the input/output part 133. Then, the control part 120 of the robot controller 120 inputs the image information output from the input/output part 133 of the camera 130 by the first input/output part 123a, and transmits the image information from the transmitting part 122a to the central server 200 via the network cloud NW1. With this arrangement, the control part 201, in step SB10, receives the image information transmitted from the transmitting part 122a of the robot controller 120 by the communication control part 202.

Subsequently, in step SB20, the control part 201 performs suitable known feature extraction processing on the image information received in the above described step SB10 based on the common image processing algorithm configured in the above described step SB4. With this arrangement, the pattern of the image information is extracted. Hereinafter, the extracted pattern is suitably referred to as the "input pattern."

Then, the flow proceeds to step SB30 where the control part 201 sequentially collates (matches) the input pattern extracted in the above described step SB20 and the plurality of registered patterns stored in the above described teaching information database 2030 using a suitable known pattern matching (normalized correlation) processing technique. With this arrangement, the control part 201 determines whether or not the plurality of teaching information stored in the teaching information database 2030 includes teaching information in which the related registered pattern comprises a predetermined correlation with respect to the input pattern. Specifically, the control part 201 determines whether or not the plurality of teaching information stored in the teaching information database 2030 includes teaching information in which the correlation degree that indicates the degree of correlation of the related registered pattern with respect to the input pattern is greater than a predetermined value set in advance. Note that the correlation degree may be expressed in other words as the accuracy of the above described matching. The procedure of this step SB30 functions as a correlation determining part.

Subsequently, in step SB40, the control part 201 determines whether or not it has been determined that teaching information in which the correlation degree of the related registered pattern is greater than a predetermined value is included in the above described step SB30. In a case where it has been determined that teaching information in which the correlation degree of the related registered pattern is greater than the predetermined value is included, the condition of step SB40 is satisfied and the flow proceeds to step SB50.

In step SB50, the control part 201 selects specific teaching information in which the related registered pattern has the highest correlation degree among the plurality of teaching information stored in the teaching information database 2030, and acquires the information from the teaching information database 2030. Then, the acquired specific teaching information is transmitted along with correlation degree data that indicates the correlation degree corresponding to the specific teaching information to the storage device 124 of the robot controller 120 of the corresponding site by the communication control part 202 via the network cloud NW1. The procedure of this step SB50 functions as a first transferring part. Subsequently, the processing shown in this flow ends.

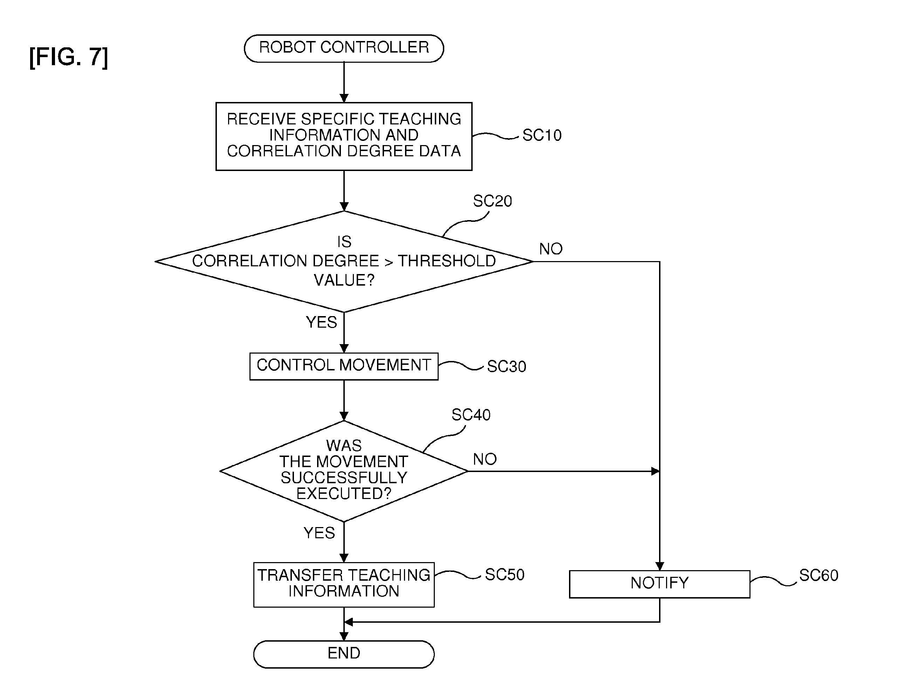

The following describes the control procedure executed by the control part 121 of the robot controller 120 in accordance with a case where specific teaching information and correlation degree data are transferred from the central server 200, using FIG. 7.

In FIG. 7, when the specific teaching information and correlation degree data are transferred from the communication control part 202 of the central server 200 in step SB50 of the above described FIG. 6, first in step SC10, the control part 121 receives the specific teaching information and correlation degree data by the receiving part 122b. Then, the received specific teaching information is stored in the storage device 124.

Subsequently, in step SC20, the control part 121 determines whether or not the correlation degree indicated by the correlation degree data received in the above described step SC10 is greater than a predetermined threshold value set in advance. The procedure of this step SC20 is equivalent to the correlation degree determining part. If the correlation degree is greater than the threshold value, the condition of step SC20 is satisfied and the flow proceeds to step SC30.

In step SC30, the control part 121 controls the movement of the robot 110 with respect to the work W based on the specific teaching information stored in the storage device 124 in the above described step SC10 (the information may be used as is or after suitable arrangement). At this time, if the tool 112 attached to the tip end of the arm 111 of the robot 110 differs from the tool 112 for which teaching has been performed, the robot 110 is caused to execute the aforementioned tool replacement movement and, after the tool 112 on the tip end of the arm 111 has been replaced, caused to execute movement with respect to the work W. With this arrangement, the robot 110 is caused to execute the handling work of the work W.

Then, the flow proceeds to step SC40 where the control part 121 determines whether or not the movement of the robot 110 with respect to the work W has been successfully executed. This decision may be made by disposing a sensor for detecting movement errors of the robot 110 in each site, and determining whether or not a movement error has been detected by this sensor, for example. Or, the decision may be made by disposing an operation button to be operated by an observer (serving as the instructor as well; hereinafter the same) in each site when a movement error of the robot 110 is discovered, and determining whether or not this operation button has been operated by the observer. The procedure of this step SC40 functions as a movement determining part. If the movement of the robot 110 has been successfully executed, the condition of step SC40 is satisfied and the flow proceeds to step SC50.

In step SC50, the control part 121 acquires the teaching information that regulates the movement of the robot 110 and has been determined to be successfully executed in the above described step SC40 (such as information indicating the type of the tool 112, information indicating the lifting position of the work W, and information indicating the movement speed during the handling work of the work W, for example) from the storage device 124. Then, the acquired teaching information is transferred from the transmitting part 122a to the above described teaching information database 2030 of the central server 200 via the network cloud NW1. The procedure of this step SC50 functions as a second transferring part. Subsequently, the processing shown in this flow ends. With this arrangement, the control part 201 of the central server 200 receives the teaching information transferred from the transmitting part 122a of the robot controller 120 by the communication control part 202. Then, the received teaching information is stored in the teaching information database 2030 in association with the input patterns related to the work W handled by the movement of the robot 110 regulated by the teaching information.

On the other hand, if the condition of step SC20 is not satisfied since the correlation degree is less than or equal to the predetermined threshold value in the above described step SC20, and the condition of the step SC40 is not satisfied since the movement of the robot 110 has not been successfully executed in the above described step SC40, the flow proceeds to step SC60.

In step SC60, the control part 121 generates a notifying instruction signal for causing a notifying part (such as a speaker, lamp, or display, for example; not shown) to execute a predetermined error notification (such as audio output from a speaker, lamp illumination, or indication by a display, for example). Then, the generated notifying instruction signal is output to the notifying part, causing the notifying part to execute the error notification. With this arrangement, the observer is requested to edit the teaching information (or create new teaching information) by the operation part 142 of the IF device 140. Subsequently, the processing shown in this flow ends.

Returning to FIG. 6, in a case where it has been determined that teaching information in which the correlation degree of the related registered pattern is greater than the predetermined value is not included in the above described step SB30, the condition of step SB40 is not satisfied and the flow proceeds to step SB60.

In step SB60, the control part 201 transmits a signal that indicates that the teaching information database 2030 does not include teaching information in which the correlation degree of the related registered pattern is greater than the predetermined value (hereinafter suitably referred to as "error signal") to the robot controller 120 of the corresponding site by the communication control part 202 via the network cloud NW1. Subsequently, the processing shown in this flow ends.

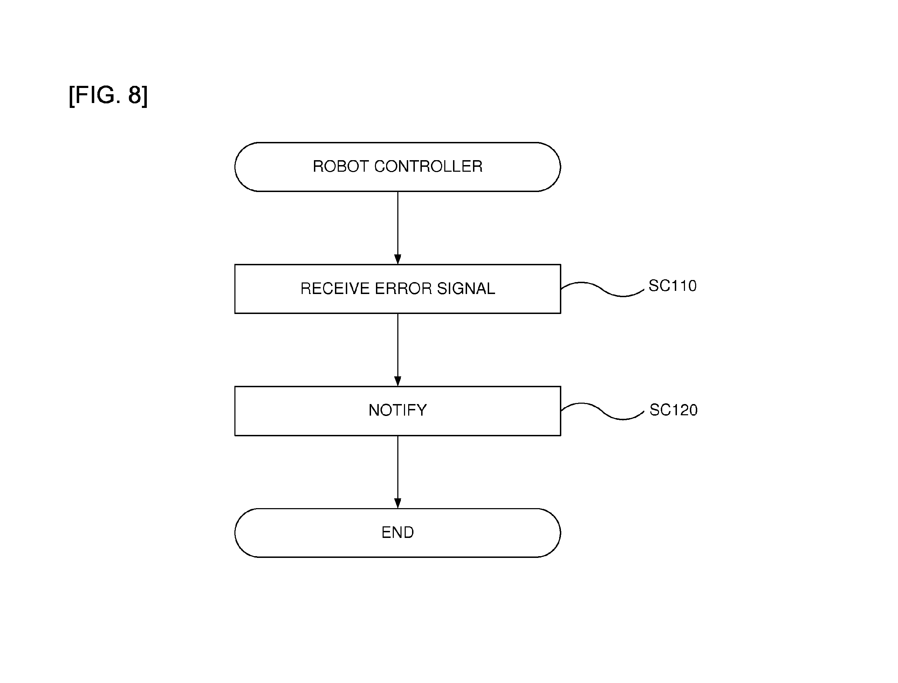

The following describes the control procedure executed by the control part 121 of the robot controller 120 in accordance with a case where an error signal is transmitted from the central server 200, using FIG. 8.

In FIG. 8, when an error signal is output from the communication control part 202 of the central server 200 in step SB60 of the above described FIG. 6, first in step SC110, the control part 121 receives the error signal by the receiving part 122b.

Subsequently, in step SC120, the control part 121 outputs the notifying instruction signal to the notifying part, causing the notifying part to execute error notification, in the same manner as step SC60 of the above described FIG. 7. With this arrangement, the observer is requested to edit the teaching information (or create new teaching information) by the operation part 142 of the IF device 140. Subsequently, the processing shown in this flow ends. The procedure of this step SC120 and step SC60 of the above described FIG. 7 functions as an input requesting part.

In the robot system 1 in this embodiment described above, the central server 200 respectively receives image information of the work W taken by the camera 130 of each site, and extracts the pattern of the received image information. Then, the extracted input pattern and the plurality of registered patterns stored in the teaching information database 2030 are sequentially matched. At this time, if the teaching information database 2030 stores teaching information in which the correlation degree of the related registered pattern with respect to the input pattern is greater than the predetermined value, the central server 200 acquires the aforementioned specific teaching information from the teaching information database 2030 and transfers the information to the storage device 124 of the robot controller 120 of the corresponding site. With this arrangement, the robot controller 120 that receives the specific teaching information transferred from the central server 200 controls the movement of the robot 110 based on the specific teaching information, making it possible to cause the robot 110 to execute the handling work of the work W. Further, in a case where the work W is an irregular object as in this embodiment, generally the instructor must perform teaching work each time the work W that serves as the work target of the robot 110 changes. In response, according to this embodiment, if the teaching information database 2030 stores teaching information for the work W that is correlated (similar in shape or size, for example) to the work W serving as the work target, the robot controller 120 controls the movement of the robot 110 based on the teaching information as described above, making it possible to cause the robot 110 to execute the handling work of the work W.

As described above, according to this embodiment, the instructor no longer needs to reteach the movement of the robot 110 with respect to the work W, making it possible to omit or simplify the teaching work performed by the instructor. As a result, it is possible to decrease the labour burden of the instructor in relation to teaching work, and improve instructor convenience.

Further, in particular, according to this embodiment, if the teaching information database 2030 does not store teaching information in which the correlation degree of the related registered pattern with respect to the input pattern is greater than the predetermined value, the central server 200 transmits the aforementioned error signal to the robot controller 120 of the corresponding site. Then, the robot controller 120 that receives the error signal transmitted from the central server 200 causes the notifying part to execute error notification and requests editing or the like of the teaching information by the operation part 142 of the IF device 140. When the instructor performs editing or the like of the teaching information in accordance with this request, the robot controller 120 controls the movement of the robot 110 based on the teaching information, making it possible to cause the robot 110 to execute the handling work of the work W.

Further, in particular, according to this embodiment, the robot controller 120 determines whether or not the movement of the robot 110 with respect to the work W has been successfully executed. Then, if it is determined that the movement of the robot 110 has been successfully executed, the robot controller 120 acquires the teaching information that regulates the movement from the storage device 124 and transfers the information to the teaching information database 2030 of the central server 200. With this arrangement, the teaching information database 2030 stores the teaching information transferred from the robot controller 120 in association with the input pattern related to the work W handled by the movement of the robot 110 regulated by the teaching information. With this arrangement, it is possible to accumulate teaching information for which it has been confirmed that the movement with respect to the work W by the robot 110 has been actually successfully executed in the teaching information database 2030, thereby making it possible to improve the reliability of the teaching information inside the teaching information database 2030.

Further, in particular, according to this embodiment, the central server 200 transfers the specific teaching information along with the correlation degree data corresponding to the specific teaching information to the storage device 124 of the robot controller 120 of the corresponding site. Then, the robot controller 120 that receives the specific teaching information and correlation degree data transferred from the central server 200 determines whether or not the correlation degree indicated by the received correlation degree data is greater than a threshold value. Then, if it is determined that the correlation degree is greater than the threshold value, the movement of the robot 110 is controlled based on the input specific teaching information. On the other hand, if it is determined that the correlation degree is less than or equal to the threshold value, the notifying part is caused to execute error notification, requesting editing or the like of the teaching information by the operation part 142 of the IF device 140. As described above, by distinguishing whether or not the specific teaching information transferred from the teaching information database 2030 is to be utilized by using the correlation degree as a numerical index, it is possible to avoid the occurrence of a defect where the movement of the robot 110 is not executed successfully due to the use of teaching information for the work W that does not have a very high degree of similarity with the work W that serves as the work target of the robot 110.

Note that the embodiments are not limited to the above, and various modifications may be made without deviating from the spirit and scope of the disclosure. For example, while the image information of the work W taken by the camera 130 of each site is transmitted to the central server 200 and feature extraction processing is performed on the image information to extract the pattern of the image information on the central server 200 side in the above described embodiment, the present disclosure is not limited thereto. That is, the feature extraction processing performed on the above described image information may be performed on the side of each site. In such a case, the pattern of the image information on which feature extraction processing has been performed is transmitted from each site to the central server 200. Subsequently, the processing is the same as that in the above described embodiment.

Further, while the teaching information database 2030 stores the plurality of image information patterns and the plurality of teaching information respectively in association in the above described embodiment, the present disclosure is not limited thereto. That is, the teaching information database 2030 may store a plurality of image information and a plurality of teaching information respectively in association.

Further, while the above described embodiment has described an illustrative scenario in which the handling work of the work W is performed by the robot 110, the present disclosure is not limited thereto, allowing application to cases where work painting, work welding, and the like are performed by a robot. In such a case, the above described work painting, work welding, and the like are equivalent to the predetermined work.

Further, in addition to the above, the present disclosure may be applied to a case where communication (such as reception of a visitor at a company office building, site, or the like, or real or virtual world services, for example), including dialog with a person by a robot with a microphone as a sensor, is performed. In such a case, the above described communication which includes dialog with the person is equivalent to the predetermined work.

Further, while the camera 130, microphone, and the like are disposed as a part of the work facilities of the sites in the above, the present disclosure is not limited thereto, allowing disposition of other sensors (such as a tactile sensor, for example).

While, in the above, the large-capacity storage device 203 of the central server 200 shared by the work facilities 100 of the plurality of sites is made to store the teaching information database 2030 that stores teaching information as an example of technical information (know-how), the present disclosure is not limited thereto. For example, the large-capacity storage device 203 of the central server 200 may be made to store a database that stores other technical information.

Further, the flowcharts shown in the aforementioned FIG. 6, FIG. 7, and FIG. 8 are not limited to the procedures shown in the embodiments, allowing procedures to be added, deleted, and changed in terms of order without deviating from the spirit and scope of the disclosure.

Further, other than that already stated above, techniques based on the above described embodiment may be suitably utilized in combination as well. [0074]

Although other examples are not individually described herein, various changes can be made according to the above described embodiments and the like without deviating from the spirit and scope of the disclosure.

### Explanation of Reference Numerals

- 1: Robot system
- 100: Work facility
- 110: Robot
- 120: Robot controller
- 121: Control part
- 122a: Transmitting part (Transmitter)
- 122b: Receiving part (Receiver)
- 124: Storage device (Storage part)
- 130: Camera (Image sensor, Sensor)
- 140: IF device (Robot teaching device)
- 142: Operation part
- 143: Input/Output part (Information output part)
- 200: Central server (Central computer device)
- 201: Control part
- 202: Communication control part (Information accepting part, Signal output part)
- 2030: Teaching information database
- NW1: Network cloud (Network)

## Claims

1. A robot system, comprising
one or more work facilities comprising a robot configured to perform predetermined work, a robot controller including a storage part configured to store teaching information which regulates a movement of the robot and controlling the movement of the robot based on the teaching information stored in the storage part, and a sensor provided in correspondence with the robot; and
a central computer device data-communicably connected to each of the one or more work facilities;
the central computer device comprising
a teaching information database configured to store a plurality of the teaching information in association with detection information of the sensor or processed information acquired by performing processing based on a processing algorithm for the detection information in each work facility on the detection information;
an information accepting part configured to accept the detection information of the sensor of each work facility; and
a correlation determining part configured to determine whether or not the plurality of teaching information stored in the teaching information database includes teaching information comprising a predetermined correlation with respect to the detection information accepted by the information accepting part or the processed information corresponding thereto, based on the detection information or the processed information; and
the robot system further comprises a first transferring part configured to transfer specific the teaching information determined to comprise the correlation by the correlation determining part from the teaching information database to the storage part of a corresponding the work facility.

2. The robot system according to claim 1, wherein
each work facility further comprises a robot teaching device comprising an operation part for performing an operation input of the teaching information, and an information output part configured to output the teaching information input by the operation part to the storage part of the robot controller;
the central computer device further comprises a signal output part configured, in a case where the correlation determining part determines that teaching information comprising the correlation is not included, to output a signal indicating so to a corresponding the work facility; and
each work facility further comprises an input requesting part configured, in a case where the signal output from the signal output part is input, to request operation input of the teaching information by the operation part.

3. The robot system according to claim 2, wherein
each work facility further comprises a movement determining part configured to determine whether or not the movement of the robot has been successfully executed; and
the robot system further comprises a second transferring part configured, in a case where the movement determining part determines that the movement has been successfully executed, to transfer the teaching information related to the movement from the storage part of the robot controller to the teaching information database of the central computer device; and
the teaching information database stores the teaching information transferred by the second transferring part in association with the detection information of the sensor at the time of movement based on the teaching information or the processed information corresponding thereto.

4. The robot system according to claim 3, wherein
the first transferring part transfers the specific teaching information along with a correlation degree indicating a degree of correlation with respect to the detection information accepted by the information accepting part or the processed information corresponding thereto.

5. The robot system according to claim 4, wherein
the robot controller of each work facility further comprises a correlation degree determining part configured to determine whether or not the correlation degree transferred by the first transferring part is greater than a predetermined threshold value and, in a case where the correlation degree determining part determines that the correlation degree is greater than the threshold value, controls the movement of the robot based on the specific teaching information; and
the input requesting part requests operation input of the teaching information by the operation part of the robot teaching device in a case where the correlation degree determining part determines that the correlation degree is less than or equal to the threshold value.

6. The robot system according to any one of claims 1 to 5, wherein
the sensor of each work facility is an image sensor configured to generate image information of a work target of the robot as the detection information;
the teaching information database of the central computer device stores the plurality of teaching information in association with the image information or processed image information acquired by performing image processing based on a processing algorithm for the image information in each work facility on the image information;
the information accepting part accepts the image information generated by the image sensor of each work facility; and
the correlation determining part determines whether or not the plurality of teaching information stored in the teaching information database includes teaching information comprising the correlation with respect to the image information accepted by the information accepting part or the processed image information corresponding thereto, based on the image information or the processed image information.

7. The robot system according to any one of claims 1 to 6, wherein
the central computer device is configured as an aggregate of one or more computation devices and one or more storage devices linked by a network.

8. A work facility used in the robot system according to any one of claims 1 to 7, comprising a robot configured to perform predetermined work, a robot controller including a storage part configured to store teaching information which regulates a movement of the robot and controlling the movement of the robot based on the teaching information stored in the storage part, and a sensor provided in correspondence with the robot, further comprising
a transmitter configured to transmit detection information of the sensor to a central computer device comprising a teaching information database configured to store a plurality of the teaching information in association with the detection information or the processed information corresponding thereto, via a network; and
a receiver configured to receive specific the teaching information determined to comprise a predetermined correlation with respect to the detection information transmitted by the transmitter or the processed information corresponding thereto among the plurality of teaching information stored in the teaching information database, via a network; and
the storage part stores the specific teaching information received by the receiver.
